# EUROPÄISCHE PATENTSCHRIFT

(11) **EP 2 294 120 B1**
(45) Veröffentlichungstag und Bekanntmachung des Hinweises auf die Patenterteilung: **25.04.2012**
(21) Anmeldenummer: 09769191.9
(22) Anmeldetag: 19.06.2009
(51) Int. Cl.: C08K 3/22, C08K 3/00

(54) **WÄRMELEITFÄHIGE POLYAMIDE MIT DIATOMEENERDE**
HEAT CONDUCTING POLYAMIDES WITH DIATOMACEOUS EARTH
POLYAMIDE THERMOCONDUCTEUR AVEC TERRE DE DIATOMÉES

(30) Priorität: 27.06.2008 EP 08159147
(43) Veröffentlichungstag der Anmeldung: 16.03.2011
(73) Patentinhaber: BASF SE, 67056 Ludwigshafen (DE)
(72) Erfinder: BENTEN, Rebekka von, 67063 Ludwigshafen (DE)
(86) Internationale Anmeldenummer: PCT/EP2009/057665
(87) Internationale Veröffentlichungsnummer: WO 2009/156342

(56) Entgegenhaltungen:
- WO-A-2006/036151
- WO-A-2007/113116
- DE-A1- 19 607 650

## Beschreibung

Die Erfindung betrifft Thermoplastische Formmassen, enthaltend
A) 19,9 bis 69,99 Gew.-% eines thermoplastischen Polyamids
B) 30 bis 80 Gew.-% eines Aluminiumoxides
C) 0,01 bis 30 Gew.-% Diatomeenerde
D) 0 bis 30 Gew.-% weiterer Zusatzstoffe,
wobei die Summe der Gewichtsprozente A) bis D) 100 % ergibt.

Weiterhin betrifft die Erfindung die Verwendung der erfindungsgemäßen Formmassen zur Herstellung von Fasern, Folien und Formkörpern jeglicher Art, sowie die hierbei erhältlichen Formkörper.

Es ist bekannt, dass sich die Wärmeleitfähigkeit (WLF) von Polymeren durch den Zusatz mineralischer oder metallischer Füllstoffe erhöhen lässt. Um nennenswerte Effekte zu erzielen, ist der Zusatz von großen Mengen Füllstoff nötig, was sich nachteilig auf die Verarbeitbarkeit der Komposite und die mechanischen Eigenschaften und die Oberflächenqualität der daraus erhältlichen Formkörper auswirkt.

Der Einsatz von Diatomeenerden in Kunststoffen, beispielsweise zur Mattierung oder als Antiblockmittel für Folien ist beispielsweise aus RÖMPP's Online Lexikon, elektronische Fassung Version 3.0 bekannt.

Der vorliegenden Erfindung lag deswegen die Aufgabe zugrunde, gut verarbeitbare Formmassen bereitzustellen, die zu Formkörpern mit verbesserter thermischer Leitfähigkeit und guten mechanischen Eigenschaften (insbesondere Zähigkeit) verarbeitet werden können.

Demgemäß wurden die eingangs definierten Formmassen gefunden. Bevorzugte Ausführungsformen sind den Unteransprüchen zu entnehmen.

Als Komponente A) enthalten die erfindungsgemäßen Formmassen 19,99 bis 69,99, vorzugsweise 20 bis 59 und insbesondere 27 bis 45 Gew.-% mindestens eines Polyamides.

Die Polyamide der erfindungsgemäßen Formmassen weisen im allgemeinen eine Viskositätszahl von 70 bis 350, vorzugsweise 70 bis 170 ml/g auf, bestimmt in einer 0,5 gew.-igen Lösung in 96 gew.-%iger Schwefelsäure bei 25°C gemäß ISO 307. Halbkristalline oder amorphe Harze mit einem Molekulargewicht (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin, Di-(4-aminophenyl)methan, Di-(4-aminocyclohexyl)-methan, 2,2-Di- (4-aminophenyl)-propan, 2,2-Di-(4-aminocyclohexyl)-propan oder 1,5-Diamino-2-methyl-pentan.

Bevorzugte Polyamide sind Polyhexamethylenadipinsäureamid, Polyhexamethylensebacinsäureamid und Polycaprolactam sowie Copolyamide 6/66, insbesondere mit einem Anteil von 5 bis 95 Gew.-% an Caprolactam-Einheiten.

Weiterhin geeignete Polyamide sind erhältlich aus ω-Aminoalkylnitrilen wie beispielsweise Aminocapronitril (PA 6) und Adipodinitril mit Hexamethylendiamin (PA 66) durch sog. Direktpolymerisation in Anwesenheit von Wasser, wie beispielsweise in der DE-A 10313681, EP-A 1198491 und EP 922065 beschrieben.

Außerdem seien auch noch Polyamide erwähnt, die z.B. durch Kondensation von 1,4-Diaminobutan mit Adipinsäure unter erhöhter Temperatur erhältlich sind (Polyamid 4,6). Herstellungsverfahren für Polyamide dieser Struktur sind z.B. in den EP-A 38 094, EP-A 38 582 und EP-A 39 524 beschrieben.

Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist.

Weiterhin haben sich solche teilaromatischen Copolyamide wie PA 6/6T und PA 66/6T als besonders vorteilhaft erwiesen, deren Triamingehalt weniger als 0,5, vorzugsweise weniger als 0,3 Gew.-% beträgt (siehe EP-A 299 444).

Die Herstellung der bevorzugten teilaromatischen Copolyamide mit niedrigem Triamingehalt kann nach den in den EP-A 129 195 und 129 196 beschriebenen Verfahren erfolgen.

Die nachfolgende nicht abschließende Aufstellung enthält die genannten, sowie weitere Polyamide A) im Sinne der Erfindung und die enthaltenen Monomeren.

AB-Polymere:

| | |
|---|---|
| PA 4 | Pyrrolidon |
| PA 6 | ε-Caprolactam |
| PA 7 | Ethanolactam |
| PA 8 | Capryllactam |
| PA 9 | 9-Aminopelargonsäure |
| PA 11 | 11-Aminoundecansäure |
| PA 12 | Laurinlactam |
| AA/BB-Polymere | |
| PA 46 | Tetramethylendiamin, Adipinsäure |
| PA 66 | Hexamethylendiamin, Adipinsäure |
| PA 69 | Hexamethylendiamin, Azelainsäure |
| PA 610 | Hexamethylendiamin, Sebacinsäure |
| PA 612 | Hexamethylendiamin, Decandicarbonsäure |
| PA 613 | Hexamethylendiamin, Undecandicarbonsäure |
| PA 1212 | 1,12-Dodecandiamin, Decandicarbonsäure |
| PA 1313 | 1,13-Diaminotridecan, Undecandicarbonsäure |
| PA 6T | Hexamethylendiamin, Terephthalsäure |
| PA MXD6 | m-Xylylendiamin, Adipinsäure |
| AA/BB-Polymere | |
| PA 6I | Hexamethylendiamin, Isophthalsäure |
| PA 6-3-T | Trimethylhexamethylendiamin, Terephthalsäure |
| PA 6/6T | (siehe PA 6 und PA 6T) |
| PA 6/66 | (siehe PA 6 und PA 66) |
| PA 6/12 | (siehe PA 6 und PA 12) |
| PA 66/6/610 | (siehe PA 66, PA 6 und PA 610) |
| PA 6I/6T | (siehe PA 6I und PA 6T) |
| PA PACM 12 | Diaminodicyclohexylmethan, Laurinlactam |
| PA 6I/6T/PACM | wie PA 6I/6T + Diaminodicyclohexylmethan |
| PA 12/MACMI | Laurinlactam, Dimethyl-diaminodicyclohexylmethan, Isophthalsäure |
| PA 12/MACMT | Laurinlactam, Dimethyl-diaminodicyclohexylmethan, Terephthalsäure |
| PA PDA-T | Phenylendiamin, Terephthalsäure |

Die thermoplastischen Formmassen enthalten als Komponente B) erfindungsgemäß 30 bis 80 Gew.-% eines Al-Oxids. Bevorzugt beträgt der Anteil B) in den erfindungsgemäßen Formmassen 40 bis 70 und insbesondere 50 bis 60 Gew.-%

Geeignete Oxide weisen vorzugsweise ein Aspektverhältnis kleiner 10, bevorzugt kleiner 7,5 und insbesondere kleiner 5 auf.

Der bevorzugte mittlere Partikeldurchmesser (d₅₀) beträgt von 0,2 bis 20, vorzugsweise von 0,3 bis 15 und insbesondere von 0,35 bis 10 µm gemäß Lasergranulometrie nach ISO 13320-1.

Derartige Produkte sind beispielsweise von der Firma Almatis im Handel erhältlich.

Unter einem d₅₀-Wert versteht der Fachmann in der Regel den Teilchengrößenwert (Partikeldurchmesser), bei welchem 50 % der Teilchen eine kleinere Teilchengröße aufweisen und 50 % eine größere Teilchengröße aufweisen.

Der d₁₀-Wert ist vorzugsweise kleiner 10 µm, insbesondere kleiner 5 µm und ganz besonders bevorzugt kleiner 2,2 µm.

Bevorzugte d₉₀-Werte sind kleiner 50 µm und insbesondere kleiner 30 µm und ganz besonders bevorzugt kleiner 30 µm.

Aluminiumoxide (Tonerde), Al₂O₃, MG. 101,96. Die Oxide treten in verschiedenen Modifikationen auf, von denen das hexagonale α -Oxid die einzige thermodynamisch stabile Modifikation ist. Gut charakterisiert ist weiterhin das kubisch-flächenzentrierte γ-Al₂O₃. Es entsteht aus den Aluminiumhydroxiden durch Erhitzen auf 400-800°C und kann wie die anderen Modifikationen durch Glühen auf über 1100° in das α-Al₂0₃ übergeführt werden. Unter β-Al₂O₃ versteht man eine Gruppe von Oxiden, die kleine Mengen Fremd-lonen im Kristallgitter enthalten. Andere Modifikationen haben ebenso wie die zahlreichen Übergangsformen zwischen den Aluminiumhydroxiden und den beiden geringere Bedeutung. Bevorzugt ist α-Al₂O₃, Dichte 3,98, Härte 9, Schmp. 2053°C, welches unlöslich in Wasser, Säuren u. Basen ist. Technisch wird das α-Al₂O₃ aus Bauxit nach dem Bayer-Verfahren gewonnen. Die Hauptmenge dient zur elektrolytischen Herstellung von Aluminium. Die Oxide befinden sich als dünne Schutzschicht auf Aluminium; durch chemische oder anodische Oxidation lässt sich diese OxidSchicht verstärken.

In der Natur kommt α-Al₂O₃ als Korund vor, Schmp. 2050°C. Korund ist meist durch Verunreinigungen getrübt und oft auch gefärbt. Heute gewinnt man Korund technisch als Elektrokorund; hierbei schmilzt man aus Bauxid gewonnenes Al₂O₃. im elektrischen Lichtbogenofen über 2000°C. Man erhält so ein sehr hartes Produkt mit ca. 99 % α-Al₂O₃.

Die sog. aktiven Oxide werden durch Fällungsverfahren aus Aluminium-Salzlösung - z.B. über thermisch nachbehandelte Aluminiumhydroxid-Gele - oder durch Calcination aus α-Aluminiumhydroxid bei niedrigen Temperaturen oder durch Stoßerhitzung hergestellt.

Vorzugsweise weist die Komponente B) eine spezifische Oberfläche nach BET (gemäß ISO 9277) von < 12, bevorzugt mindestens 0,1 vorzugsweise mindestens 0,3 m²/g auf.

Die bevorzugte Dichte beträgt 2,5 bis 4,5, insbesondere 3,9 bis 4,0 g/cm³.

Der Natriumoxidgehalt beträgt vorzugsweise weniger als 0,4, insbesondere von 0,01 bis 0,35 Gew.-%, bezogen auf 100 Gew.-% B).

Die Wärmeleitfähigkeit gemäß DIN 52612 beträgt vorzugsweise mindestens 20 W/mK und insbesondere mindestens 25 W/mK.

Als Komponente C) enthalten die erfindungsgemäßen Formmassen 0,01 bis 30, vorzugsweise 1 bis 20 und insbesondere 5 bis 15 Gew.-% Diatomeenerde (oft auch als Infusorienerde, Bergmehl, Kieselgur, Terra Silicea bezeichnet).

Dies ist ein sehr feinkörniges, lockeres, leichtes, kreideähnliches, meist weißes bis hellgraues, zu den Kieselgesteinen gehörendes Sediment. Kieselgur besteht aus den formenreichen Kieselsäure-Gerüsten mikroskopisch kleiner, seit der Trias in Süß-, Brack- und Salzwasser lebender Diatomeen. Die Gerüste haben viele feinste Rillen, Vertiefungen, Kanäle usw.; daraus erklärt sich die geringe Dichte (Kieselgur schwimmt auf Wasser), das hohe Aufsaugvermögen, die gute Filterleistung und die geringe Wärme- und Schallleitfähigkeit. Für die Verwendung als Füllstoff wird Kieselgur meist calciniert (geglüht), zur Verbesserung der Helligkeit mit Alkalien auch fluxcalciniert. Die Zusammensetzung von getrockneter, geglühter und fluxcalcinierter Kieselgur ist in der Tabelle angegeben, wobei fluxcalcinierter Kieselgur bevorzugt ist.

**Tabelle**

| | getrocknet | calciniert | fluxcalciniert |
|---|---|---|---|
| SiO₂ | 72 - 88 | 88-92 | 86-95 |
| Al₂O₃ | < 0,9 - 8,5 | < 1,0 - 8,7 | < 1,0 - 8,6 |
| Fe₂O₃ | 1,5 - 3,0 | 1,5 - 3,2 | < 1,5 - 3,0 |
| CaO | 0,8-2,0 | 0,8 - 2,0 | 0,8 - 2,7 |
| Na₂O/K₂O | - | - | bis 3 |
| Glühverlust | 4-6 | - | - |

Das Pulver weist üblicherweise eine Schüttdichte von 0,15 - 0,3 g/cm³ auf. Kieselgur besteht aus biogen amorphem Opal-A und kristallinem Opal-CT (Wechsellagerung von Cristobalit, Tridymit und Abarten von Quarz; vlg. Opal), 3 - 12 % Wasser und etwas organischen Beimengungen (z.B. Bitumen). Chemische Analysen (vgl. Tabelle) ergeben zum Teil nur geringe Gehalte an Eisen, Aluminium, Calcium, Magnesium, Mangan, Titan, Natrium, Kalium, Phosphor und Schwefel. Kieselgur ist feuerbeständig, nicht elektrisch leitend und chemisch sehr beständig, z.B. gegen Säuren mit Ausnahme von Flußsäure, wird aber von Alkalien angegriffen.

Kieselgur ist sehr verbreitet, wo für das zur Lagerstättenbildung notwendige Massenwachstum der Diatomeen ein ausreichendes Angebot an gelöstem Siliciumdioxid besteht. Die meisten Lagerstätten liegen in jungen (tertiären bis rezenten) Vulkangebieten, z.B. im Myvatn-See/Island (rezente Diatomit-Bildung durch Zuströmen geothermaler Wässer, Diatomite sind verfestigte Diatomeenschlämme), in Murat und andernorts in der Auvergne/Frankreich, an mehreren Orten in Spanien sowie in Nevada, Oregon und Washington/USA. In Deutschland in der Lüneburger Heide (während zweier Zwischeneiszeiten in Seen gebildet; Abbau 1994 eingestellt) und in Sachsen-Anhalt. In Dänemark wird Molererde abgebaut. Die dänischen Vorkommen sind ebenso wie die Lagerstätte von Lompoc in Kalifornien (weltgrößte Kieselgur-Lagerstätte) durch Einwehung von Siliciumdioxidreichem vulkanischem glashaltigem Lockermaterial in Seebecken oder randlich marine Becken entstanden. Große Vorkommen gibt es auch in China und Japan.

Kieselgur wird im allgemeinen im Tagebau gefördert; die Aufbereitung umfasst Schlämmen (Entfernen von Sand, Humus und ähnlichem), Trocknen, Brennen (Calcinieren), Mahlen und Sieben. Wegen der Zerbrechlichkeit der Diatomeenskelette wird besonders bei der Erzeugung von Filtergur hauptsächlich mit Windsichtung im heißen Luftstrom gearbeitet.

Bevorzugte Komponenten C) weisen einen (d₅₀)-Wert von 0,2 bis 20, bevorzugt von 1 bis 15 und insbesondere von 5 bis 15 µm auf (gemessen gemäß ISO 13320-1 mittels Lasegranulometrie).

Die BET-Oberfläche beträgt vorzugsweise kleiner/gleich 80, vorzugsweise von 1 bis 20 m²/g (gemäß ISO 9277).

Die Diatomeenerden C) können zur besseren Verträglichkeit mit dem Thermoplasten mit einer Silanverbindung oberflächlich vorbehandelt sein.

Geeignete Silanverbindungen sind solche der allgemeinen Formel

(X-(CH₂)ₙ)ₖ-Si-(O-CₘH₂ₘ₊₁)₄₋ₖ

in der die Substituenten folgende Bedeutung haben:
- X: NH₂- 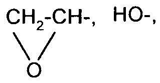 ,
- n: eine ganze Zahl von 2 bis 10, bevorzugt 3 bis 4
- m: eine ganze Zahl von 1 bis 5, bevorzugt 1 bis 2
- k: eine ganze Zahl von 1 bis 3, bevorzugt 1

Bevorzugte Silanverbindungen sind Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Die Silanverbindungen werden im allgemeinen in Mengen von 0,01 bis 2, vorzugsweise 0,6 bis 1,0 Gew.-% (bezogen auf 100 Gew.-% C)) zur Oberflächenbeschichtung eingesetzt.

Als Komponenten D) können die erfindungsgemäßen Formmassen 0 bis 30, vorzugsweise bis zu 20 Gew.-% weiterer Zusatzstoffe enthalten.

Als Komponente D) können die erfindungsgemäßen Formmassen 0 bis 3, bevorzugt 0,05 bis 3, vorzugsweise 0,1 bis 1,5 und insbesondere 0,1 bis 1 Gew.-% eines Schmiermittels enthalten.

Bevorzugt sind Al-, Alkali-, Erdalkalisalze oder Ester- oder Amide von Fettsäuren mit 10 bis 44 C-Atomen, vorzugsweise mit 14 bis 44 C-Atomen.

Die Metallionen sind vorzugsweise Erdalkali und Al, wobei Ca oder Mg besonders bevorzugt sind.

Bevorzugte Metallsalze sind Ca-Stearat und Ca-Montanat sowie Al-Stearat.

Es können auch Mischungen verschiedener Salze eingesetzt werden, wobei das Mischungsverhältnis beliebig ist.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitrat, Glycerintrilaurat, Glycerinmonobehenat und Pentaerythrittetrastearat.

Es können auch Mischungen verschiedener Ester oder Amide oder Ester mit Amiden in Kombination eingesetzt werden, wobei das Mischungsverhältnis beliebig ist.

Als weitere Komponenten D) können die erfindungsgemäßen Formmassen Wärmestabilisatoren oder Antioxidantien oder deren Mischungen, ausgewählt aus der Gruppe der Kupferverbindungen, sterisch gehinderter Phenole, sterisch gehinderter aliphatischer Amine und/oder aromatischer Amine, enthalten.

Kupferverbindungen sind in den erfindungsgemäßen Formmassen zu 0,05 bis 3, vorzugsweise 0,1 bis 1,5 und insbesondere 0,1 bis 1 Gew.-% enthalten, vorzugsweise als Cu-(I)-Halogenid, insbesondere in Mischung mit einem Alkalihalogenid, vorzugsweise KJ, insbesondere im Verhältnis 1 : 4., oder eines sterisch gehinderten Phenols oder eines Aminstabilisators oder deren Mischungen enthalten.

Als Salze des einwertigen Kupfers kommen vorzugsweise Kupfer(I)-Acetat, Kupfer(I)-Chlorid, -Bromid und -Jodid in Frage. Sie sind in Mengen von 5 bis 500 ppm Kupfer, vorzugsweise 10 bis 250 ppm, bezogen auf Polyamid, enthalten.

Die vorteilhaften Eigenschaften werden insbesondere erhalten, wenn das Kupfer in molekularer Verteilung im Polyamid vorliegt. Dies wird erreicht, wenn man der Form-Alkalihalogenid in Form einer festen, homogenen Lösung enthält. Ein typisches Konzentrat besteht z.B. aus 79 bis 95 Gew.-% Polyamid und 21 bis 5 Gew.-% eines Gemisches aus Kupferjodid oder -bromid und Kaliumjodid. Die Konzentration der festen homogenen Lösung an Kupfer liegt bevorzugt zwischen 0,3 und 3, insbesondere zwischen 0,5 und 2 Gew.-%, bezogen auf das Gesamtgewicht der Lösung und das molare Verhältnis von Kupfer(I)-Jodid zu Kaliumjodid liegt zwischen 1 und 11,5, vorzugsweise zwischen 1 und 5.

Geeignete Polyamide für das Konzentrat sind Homopolyamide und Copolyamide, insbesondere Polyamid 6 und Polyamid 6.6.

Als sterisch gehinderte Phenole eignen sich prinzipiell alle Verbindungen mit phenolischer Struktur, die am phenolischen Ring mindestens eine sterisch anspruchsvolle Gruppe aufweisen.

Vorzugsweise kommen z.B. Verbindungen der Formel 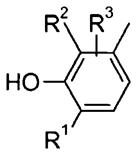 in Betracht, in der bedeuten:
R¹ und R² eine Alkylgruppe, eine substituierte Alkylgruppe oder eine substituierte Triazolgruppe, wobei die Reste R¹ und R² gleich oder verschieden sein können und R³ eine Alkylgruppe, eine substituierte Alkylgruppe, eine Alkoxigruppe oder eine substituierte Aminogruppe.

Antioxidantien der genannten Art werden beispielsweise in der DE-A 27 02 661 (US-A 4 360 617) beschrieben.

Eine weitere Gruppe bevorzugter sterisch gehinderter Phenole leiten sich von substituierten Benzolcarbonsäuren ab, insbesondere von substituierten Benzolpropionsäuren.

Besonders bevorzugte Verbindungen aus dieser Klasse sind Verbindungen der Formel 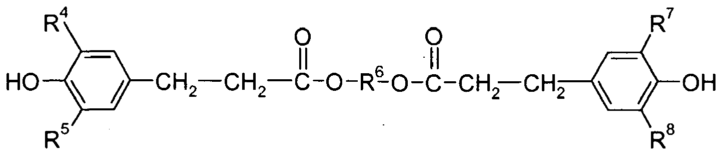 wobei R⁴, R⁵, R⁷ und R⁸ unabhängig voneinander C₁-C₈-Alkylgruppen darstellen, die ihrerseits substituiert sein können (mindestens eine davon ist eine sterisch anspruchsvolle Gruppe) und R⁶ einen zweiwertigen aliphatischen Rest mit 1 bis 10 C-Atomen bedeutet, der in der Hauptkette auch C-O-Bindungen aufweisen kann.

Bevorzugte Verbindungen, die dieser Formen entsprechen, sind

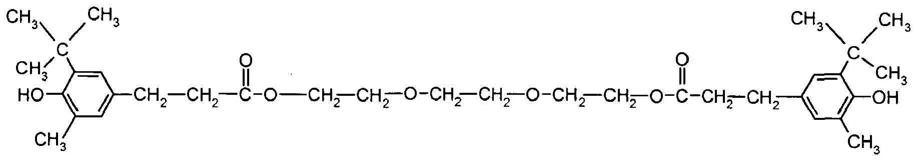

### (Irganox® 245 der Firma Ciba-Geigy)

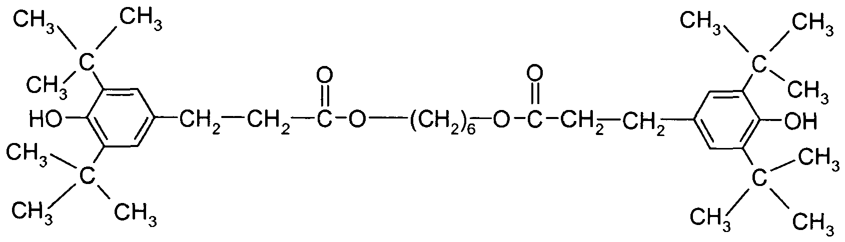

### (Irganox® 259 der Firma Ciba-Geigy)

Beispielhaft genannt seien insgesamt als sterisch gehinderte Phenole:
2,2'-Methylen-bis-(4-methyl-6-tert.-butylphenol), 1,6-Hexandiol-bis[3-(3,5-di-tert.-butyl-4-hydroxyphenyl)-propionat], Pentaerythril-tetrakis-[3-(3,5-di-tert.-butyl-4-hydroxyphenyl)-propionat], Distearyl-3,5-di-tert.-butyl-4-hydroxybenzylphosphonat, 2,6,7-Trioxa-1-phosphabicyclo-[2.2.2]oct-4-yl-methyl-3,5-di-tert.-butyl-4-hydroxyhydrocinnamat, 3,5-Di-tert.-butyl-4-hydroxyphenyl-3,5-distearyl-thiotriazylamin, 2-(2'-Hydroxy-3'-hydroxy-3',5'-di-tert.-butylphenyl)-5-chlorbenzotriazol, 2,6-Di-tert.-butyl-4-hydroxymethylphenol, 1,3,5-Trimethyl-2,4,6-tris-(3,5-di-tert.-butyl-4-hydroxybenzyl)-benzol, 4,4'-Methylen-bis-(2,6-di-tert.-butylphenol), 3,5-Di-tert.-butyl-4-hydroxybenzyl-dimethylamin.

Als besonders wirksam erwiesen haben sich und daher vorzugsweise verwendet werden 2,2'-Methylen-bis-(4-methyl-6-tert.-butylphenyl), 1,6-Hexandiol-bis-(3,5-di-tert.-butyl-4-hydroxyphenyl]-propionat (Irganox® 259), Pentaerythrityl-tetrakis-[3-(3,5-di-tert.-butyl-4-hydroxyphenyl)-propionat] sowie N,N'-Hexamethylen-bis-3,5-di-tert.-butyl-4-hydroxyhydrocinnamid (Irganox® 1098) und das vorstehend beschriebene Irganox® 245 der Firma Ciba Geigy, das besonders gut geeignet ist.

Die phenolischen Antioxidantien, die einzeln oder als Gemische eingesetzt werden können, sind in einer Menge von 0,05 bis zu 3 Gew.-%, vorzugsweise von 0,1 bis 1,5 Gew.-%, insbesondere 0,1 bis 1 Gew.-%, bezogen auf das Gesamtgewicht der Formmassen A) bis E) enthalten.

In manchen Fällen haben sich sterisch gehinderte Phenole mit nicht mehr als einer sterisch gehinderten Gruppe in ortho-Stellung zur phenolischen Hydroxygruppe als besonders vorteilhaft erwiesen; insbesondere bei der Beurteilung der Farbstabilität bei Lagerung in diffusem Licht über längere Zeiträume.

Die aminischen Stabilisatoren können in den erfindungsgemäßen Formmassen von 0 bis 3, bevorzugt 0,01 bis 2, vorzugsweise 0,05 bis 1,5 Gew.-% eines Aminstabilisators enthalten sein. Vorzugsweise geeignet sind sterisch gehinderte Aminverbindungen. Es kommen z.B. Verbindungen der Formel 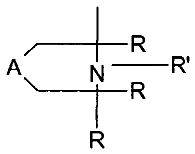 in Betracht, wobei
R gleiche oder verschiedene Alkylreste,
R' Wasserstoff oder einen Alkylrest und
A eine gegebenenfalls substituierte 2- oder 3-gliedrige Alkylenkette bedeutet.

Bevorzugte Komponenten sind Derivate des 2,2,6,6-Tetramethylpiperidins wie:
4-Acetoxy-2,2,6,6-tetramethylpiperidin,
4-Stearoyloxy-2,2,6,6-tetramethylpiperidi n,
4-Aryloyloxy-2,2,6,6-tetramethylpiperidin,
4-Methoxy-2,2,6,6-tetramethylpiperidin,
4-Benzoyloxy-2,2,6,6-tetramethylpiperidin,
4-Cyclohexyloxy-2,2,6,6-tetramethylpiperidin
4-Phenoxy-2,2,6,6-tetramethylpiperidin,
4-Benzoxy-2,2,6,6-tetramethylpiperidin,
4 (Phenylcarbamoyloxy)-2,2,6,6-tetramethylpiperidin.

Ferner sind
Bis(2,2,6,6-tetramethyl-4-piperidyl)oxalat,
Bis(2,2,6,6-tetramethyl-4-piperidyl)malonat,
Bis(2,2,6,6-tetramethyl-4-piperidyl)adipat,
Bis(1,2,2,6,6-pentamethyl-piperidyl)sebacat,
Bis(2,2,6,6-tetramethyl-4-piperidyl)terephthalat, 1,2-bis (2,2,6,6-tetramethyl-4-piperidyloxy)ethan,
Bis(2,2,6,6-tetramethyl-4-piperidyl)hexamethylen-1,6-dicarbamat,
Bis(1-methyl-2,2,6,6-tetramethyl-4-diperidyl)adipat und
Tris(2,2,6,6-tetramethyl-4-piperidyl)benzen-1,3,5-tricarboxylat geeignet.

Darüber hinaus sind höhermolekulare Piperidinderivate wie das Dimethylsuccinatpolymer mit 4-Hydroxy-2,2,6,6-tetramethyl-7-piperidinethanol oder Poly-6-(1,1,3,3-tetramethylbutyl)amino-1,3,5-triazin-2,4-diyl(2,2,6,6-tetramethyl-piperidinyl)imino-1,6-hexandiyl(2,2,6,6-tetramethyl-14-piperidinyl)imino geeignet, welche wie Bis(2,2,6,6-tetramethyl-4-piperidyl)-sebazat besonders gut geeignet sind.

Derartige Verbindungen sind unter der Bezeichnung Tinuvin® oder Chimasorb® (eingetragenes Warenzeichen der Firma Ciba-Spezialitätenchemie GmbH) im Handel erhältlich.

Als weitere besondere bevorzugte Aminverbindung sei Uvinul® 4049 H der Firma BASF SE genannt:

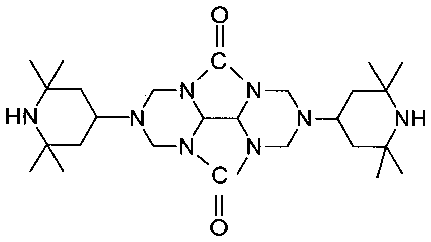

Besonders bevorzugte Beispiele für erfindungsgemäß einsetzbare Stabilisatoren sind auch solche auf der Basis sekundärer aromatischer Amine wie Addukte aus Phenylendiamin mit Aceton (Naugard® A), Addukte aus Phenylendiamin mit Linolen, Naugard® 445 (II), N,N'-Dinaphthyl-p-phenylendiamin (III), N-Phenyl-N'-cyclohexyl-p-phenylendiamin (IV) oder Mischungen von zwei oder mehreren davon

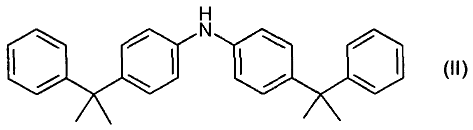

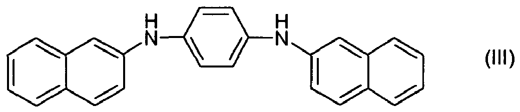

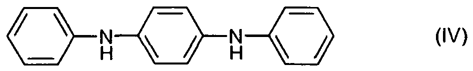

Weitere übliche Zusatzstoffe D) sind beispielsweise in Mengen bis zu 10, vorzugsweise 1 bis 5 Gew.-% kautschukelastische Polymerisate (oft auch als Schlagzähmodifier, Elastomere oder Kautschuke bezeichnet).

Ganz allgemein handelt es sich dabei um Copolymerisate die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Derartige Polymere werden z.B. in Houben-Weyl, Methoden der organischen Chemie, Bd. 14/1 (Georg-Thieme-Verlag, Stuttgart, 1961). Seiten 392 bis 406 und in der Monographie von C.B. Bucknall, "Toughened Plastics" (Applied Science Publishers, London, 1977) beschrieben.

Im folgenden werden einige bevorzugte Arten solcher Elastomerer vorgestellt.

Bevorzugte Arten von solchen Elastomeren sind die sog. Ethylen-Propylen (EPM) bzw. Ethylen-Propylen-Dien-(EPDM)-Kautschuke.

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden Hexa-1,5-dien, 5-Ethylidennorbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien z.B. Acrylsäure, Methacrylsäure und deren Derivate, z.B. Glycidyl(meth)acrylat, sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B. Ester und Anhydride, und/oder Epoxy-Gruppen enthaltende Monomere enthalten. Diese Dicarbonsäurederivate bzw. Epoxygruppen enthaltende Monomere werden vorzugsweise durch Zugabe von Dicarbonsäure- bzw. Epoxygruppen enthaltenden Monomeren der allgemeinen Formeln I oder II oder III oder IV zum Monomerengemisch in den Kautschuk eingebaut

R¹C(COOR²)=C(COOR³)R⁴ (I)

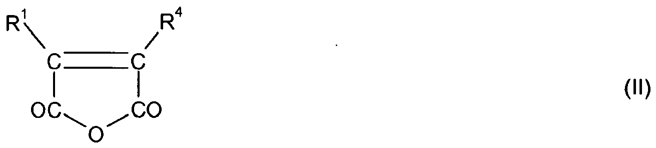

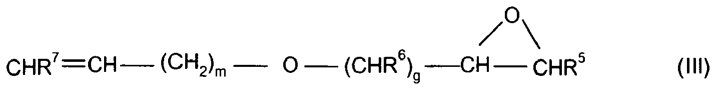

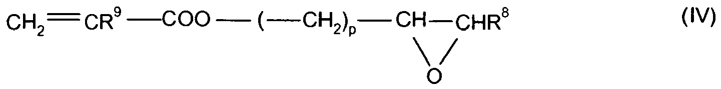

wobei R¹ bis R⁹ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist

Vorzugsweise bedeuten die Reste R¹ bis R⁹ Wasserstoff, wobei m für 0 oder 1 und g für 1 steht. Die entsprechenden Verbindungen sind Maleinsäure, Fumarsäure, Maleinsäureanhydrid, Allylglycidylether und Vinylglycidylether.

Bevorzugte Verbindungen der Formeln I, II und IV sind Maleinsäure, Maleinsäureanhydrid und Epoxygruppen-enthaltende Ester der Acrylsäure und/oder Methacrylsäure, wie Glycidylacrylat, Glycidylmethacrylat und die Ester mit tertiären Alkoholen, wie t-Butylacrylat. Letztere weisen zwar keine freien Carboxylgruppen auf, kommen in ihrem Verhalten aber den freien Säuren nahe und werden deshalb als Monomere mit latenten Carboxylgruppen bezeichnet.

Vorteilhaft bestehen die Copolymeren aus 50 bis 98 Gew.-% Ethylen, 0,1 bis 20 Gew.-% Epoxygruppen enthaltenden Monomeren und/oder Methacrylsäure und/oder Säure-anhydridgruppen enthaltenden Monomeren sowie der restlichen Menge an (Meth)acrylsäureestern.

Besonders bevorzugt sind Copolymerisate aus

| | |
|---|---|
| 50 bis 98, | insbesondere 55 bis 95 Gew.-% Ethylen, |
| 0,1 bis 40, | insbesondere 0,3 bis 20 Gew.-% Glycidylacrylat und/oder Glycidyl-methacrylat, (Meth)acrylsäure und/oder Maleinsäureanhydrid, und |
| 1 bis 45, | insbesondere 5 bis 40 Gew.-% n-Butylacrylat und/oder 2-Ethylhexyl-acrylat. |

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalysatoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflusst.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel 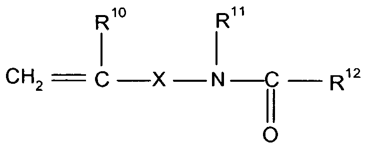 eingeführt werden können,
wobei die Substituenten folgende Bedeutung haben können:
- R¹⁰: Wasserstoff oder eine C₁- bis C₄-Alkylgruppe,
- R¹¹: Wasserstoff, eine C₁- bis C₈-Alkylgruppe oder eine Arylgruppe, insbesondere Phenyl,
- R¹²: Wasserstoff, eine C₁- bis C₁₀-Alkyl-, eine C₆- bis C₁₂-Arylgruppe oder -OR¹³
- R¹³: eine C₁- bis C₈-Alkyl- oder C₆- bis C₁₂-Arylgruppe, die gegebenenfalls mit O- oder N-haltigen Gruppen substituiert sein können,
- X: eine chemische Bindung, eine C₁- bis C₁₀-Alkylen- oder C₆-C₁₂Arylengruppe oder

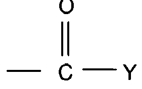

- Y: O-Z oder NH-Z und
- Z: eine C₁- bis C₁₀-Alkylen- oder C₆- bis C₁₂-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)-ethylmethacrylat, (N,N-Dimethyl-amino)ethylacrylat, (N,N-Dimethylamino)-methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannten pfropfvernetzende Monomere (graft-linking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren an dem schlagzäh modifizierenden Polymer bis zu 5 Gew.-%, vorzugsweise nicht mehr als 3 Gew.-%, bezogen auf das schlagzäh modifizierende Polymere.

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| I | Buta-1,3-dien, Isopren, n-Butylacrylat, Ethylhexylacrylat oder deren Mischungen | Styrol, Acrylnitril, Methylmethacrylat |
| II | wie I aber unter Mitverwendung von Vernetzern | wie I |
| III | wie I oder II | n-Butylacrylat, Ethylacrylat, Methylacry-lat, Buta-1,3-dien, Isopren, Ethylhexyl-acrylat |
| IV | wie I oder II | wie I oder III aber unter Mitverwendung von Monomeren mit reaktiven Gruppen wie hierin beschrieben |
| V | Styrol, Acrylnitril, Methylmethacrylat oder deren Mischungen | erste Hülle aus Monomeren wie unter I und II für den Kern beschrieben zweite Hülle wie unter I oder IV für die Hülle beschrieben |

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere, Pfropfpolymerisate mit einem inneren Kern aus n-Butylacrylat oder auf Butadienbasis und einer äußeren Hülle aus den vorstehend genannten Copolymeren und Copolymere von Ethylen mit Comonomeren, die reaktive Gruppen liefern.

Die beschriebenen Elastomere können auch nach anderen üblichen Verfahren, z.B. durch Suspensionspolymerisation, hergestellt werden.

Siliconkautschuke, wie in der DE-A 37 25 576, der EP-A 235 690, der DE-A 38 00 603 und der EP-A 319 290 beschrieben, sind ebenfalls bevorzugt.

Selbstverständlich können auch Mischungen der vorstehend aufgeführten Kautschuktypen eingesetzt werden.

Als weitere faser- oder teilchenförmige Füllstoffe D) seien Kohlenstofffasern, Glasfasern, Glaskugeln, amorphe Kieselsäure, Calciumsilicat, Calciummetasilicat, Magnesiumcarbonat, Kaolin, Kreide, gepulverter Quarz, Glimmer, Bariumsulfat und Feldspat genannt, die in Mengen bis zu 20 Gew.-%, insbesondere 1 bis 15 Gew.-% eingesetzt werden.

Als bevorzugte faserförmige Füllstoffe seien Kohlenstofffasern, Aramid-Fasern und Kaliumtitanat-Fasern genannt, wobei Glasfasern als E-Glas besonders bevorzugt sind. Diese können als Rovings oder Schnittglas in den handelsüblichen Formen eingesetzt werden.

Die faserförmigen Füllstoffe können zur besseren Verträglichkeit mit dem Thermoplasten mit einer Silanverbindung oberflächlich vorbehandelt sein.

Geeignete Silanverbindungen sind solche der allgemeinen Formel

(X-(CH₂)ₙ)ₖ-Si-(O-CₘH₂ₘ₊₁)₄₋ₖ

in der die Substituenten folgende Bedeutung haben:
- X: NH₂- 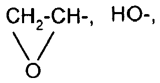 ,
- n: eine ganze Zahl von 2 bis 10, bevorzugt 3 bis 4
- m: eine ganze Zahl von 1 bis 5, bevorzugt 1 bis 2
- k: eine ganze Zahl von 1 bis 3, bevorzugt 1

Bevorzugte Silanverbindungen sind Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Die Silanverbindungen werden im allgemeinen in Mengen von 0,01 bis 2, vorzugsweise 0,025 bis 1,0 und insbesondere 0,05 bis 0,5 Gew.-% (bezogen auf die faserförmigen Füllstoffe) zur Oberflächenbeschichtung eingesetzt.

Geeignet sind auch nadelförmige mineralische Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D-(Länge Durchmesser)-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als weitere Füllstoffe seien Kaolin, calciniertes Kaolin, Wollastonit, Talkum und Kreide genannt sowie zusätzlich plättchen- oder nadelförmige Nanofüllstoffe bevorzugt in Mengen zwischen 0,1 und 10 % . Bevorzugt werden hierfür Böhmit, Bentonit, Montmorillonit, Vermicullit, Hektorit und Laponit eingesetzt. Um eine gute Verträglichkeit der plättchenförmigen Nanofüllstoffe mit dem organischen Bindemittel zu erhalten, werden die plättchenförmigen Nanofüllstoffe nach dem Stand der Technik organisch modifiziert. Der Zusatz der plättchen- oder nadelförmigen Nanofüllstoffe zu den erfindungsgemäßen Nanokompositen führt zu einer weiteren Steigerung der mechanischen Festigkeit.

Als weitere Komponenten D) können die erfindungsgemäßen thermoplastischen Formmassen übliche Verarbeitungshilfsmittel wie Stabilisatoren, Oxidationsverzögerer, weitere Mittel gegen Wärmezersetzung und Zersetzung durch ultraviolettes Licht, Gleit-und Entformungsmittel, Färbemittel wie Farbstoffe und Pigmente, Keimbildungsmittel, Weichmacher, Flammschutzmittel usw. enthalten.

Als Beispiele für Oxidationsverzögerer und Wärmestabilisatoren seien Phosphite und weitere Amine (z.B. TAD), Hydrochinone, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß und/oder Grafit, weiterhin organische Pigmente, wie Phthalocyanine, Chinacridone, Perylene sowie Farbstoffe, wie Nigrosin und Anthrachinone als Farbmittel zugesetzt werden.

Als Keimbildungsmittel können Natriumphenylphosphinat, Aluminiumoxid, Siliziumdioxid sowie bevorzugt Talkum eingesetzt werden.

Die erfindungsgemäßen thermoplastischen Formmassen können nach an sich bekannten Verfahren hergestellt werden, in dem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. Die Mischtemperaturen liegen in der Regel bei 230 bis 320°C.

Nach einer weiteren bevorzugten Arbeitsweise können die Komponenten B) bis C) sowie gegebenenfalls D) mit einem Präpolymeren gemischt, konfektioniert und granuliert werden. Das erhaltene Granulat wird in fester Phase anschließend unter Inertgas kontinuierlich oder diskontinuierlich bei einer Temperatur unterhalb des Schmelzpunktes der Komponente A) bis zur gewünschten Viskosität kondensiert.

Die erfindungsgemäßen thermoplastischen Formmassen zeichnen sich durch eine gute Fließfähigkeit bei gleichzeitig guter Mechanik, sowie eine deutlich verbesserte Wärmeleitfähigkeit aus.

Diese eignen sich zur Herstellung von Fasern, Folien und Formkörpern jeglicher Art. Nachfolgend sind einige bevorzugte Beispiele genannt:
Die beschriebenen Formmassen eignen sich, um Wärme von Wärmequellen besser abzuführen.

Bei der abgeführten Wärme kann es sich um Verlustleistung von elektrischen Baugruppen oder auch um absichtlich, durch Heizelemente erzeugte Wärme handeln. Elektrische Baugruppen mit Verlustleistung enthalten z.B. CPUs, Widerstände, ICs, Batterien, Akkus, Motoren, Spulen, Relais, Dioden, Leiterbahnen, etc.

Um die Wärme abzuführen, muss ein möglichst guter Kontakt zwischen Wärmequelle und Formmasse hergestellt werden, so dass Wärme von der Quelle über die Formmasse an die Umgebung (gasförmig, flüssig, fest) abgegeben werden kann. Um die Qualität des Kontakts zu verbessern, können auch sogenannte Wärmeleitpasten eingesetzt werden. Am besten funktioniert der Wärmeabtransport, wenn die Wärmequelle mit den Formmassen umspritzt wird.

Daneben eignen sich die Formmassen auch für die Herstellung von Wärmetauschern. Wärmetauscher werden üblicherweise von einem heißeren Medium (gasförmig, flüssig) durchströmt, welches dabei über eine Wand Wärme an ein kühleres Medium (üblicherweise auch gasförmig oder flüssig) abgibt. Beispiele dafür sind Heizkörper im Wohnbereich oder Kühlwasserkühler im Automobil. Für die Eignung der beschriebenen Formmassen zur Herstellung von Wärmetauschern spielt es weder eine Rolle, ich welche Richtung Wärme transportiert wird, noch ist wichtig, ob heißes und/oder kühles Medium aktiv umgewälzt werden oder der freien Konvektion unterliegen. Allerdings wird in der Regel der Wärmeaustausch zwischen den beteiligten Medien durch aktives Umwälzen, unabhängig vom verwendeten Wandmaterial, verbessert.

### Beispiele

Es wurden folgende Komponenten verwendet:
Komponente A:
   Polyamid 66 mit einer Viskositätszahl VZ von 130 ml/g, gemessen als 0,5 gew.-%ige Lösung in 96 gew.-%iger Schwefelsäure bei 25°C nach ISO 307 (Es wurde Ultramid® A24 der BASF AG verwendet).
Komponente B:
   Aluminiumoxid CL4400 FG: 99,8 % AL₂O₃, BET Oberfläche 0,6 m²/g, D₅₀ 7 µm Komponente C/1:
      eine fluxcalcinierte Diatomeenerde (Celite 499 aus Alicante, Spanien, der World Minerals Inc.) mit mittlerer Partikelgröße d₅₀ von 14 µm (gemessen mit Laserstrahlbeugung nach ISO 13320-1), einer spezifischen BET-Oberfläche von 2 m²/g (bestimmt nach ISO 9277) und einem Silicatgehalt von > 95 %.
Komponente C/2:
   eine fluxcalcinierte Diatomeenerde (Celite 499 aus Alicante, Spanien, der World Minerals Inc.) mit mittlerer Partikelgröße d₅₀ von 14 µm (gemessen mit Laserstrahlbeugung nach ISO 13320-1), einer spezifischen BET-Oberfläche von 2 m²/g (bestimmt nach ISO 9277) und einem Silicatgehalt von > 95 %, die mit 0,6 % [m/m] 3-Aminopropyltriethoxysilan oberflächenfunktionalisiert wurde.
Beschichtung der Komponente C/2 mit Aminosilan:
   3-Aminopropyl-triethoxysilan (0,6 g auf 100 g Diatomeenerde) wurde zur Silanolbildung in VE-Wasser (250 ml auf 100 g Diatomeenerde) vorgelegt und 30 min bei Zimmertemperatur gerührt. Die Diatomeenerde wurde zugefügt und die Suspension 1 h bei 80°C gerührt, abgesaugt und mit VE-Wasser gewaschen. Nach 5 h Trocknung bei 120°C wurde die beschichtete Diatomeenerde bei 200°C 30 min getempert.
Komponente D:
   eine Schnittglasfaser mit Filamentdurchmesser 10 µm und einer polyamidkompatiblen Aminosilanschlichte.

Die Formmassen wurden auf einer ZSK 30 bei einem Durchsatz von 10 kg/h und ca. 280°C flachem Temperaturprofil hergestellt. Komponente B) wurde an 2 Dosierstellen zur Schmelze A) hinzugegeben.

Es wurden folgende Messungen durchgeführt:
Zugversuch nach ISO 527,
Schlagzähigkeit (Charpy): ISO 179-1 eU bei 23°C
VZ: c = 5 g/l in 96 %iger Schwefelsäure, nach ISO 307
Wärmeleitfähigkeit: Laser Flash Methode mit dem Gerät LFA 447 der Firma Netzsch gemäß ASTM E 1461,
BET nach ISO 9277
d₅₀/d₉₀ durch Lasergranulometrie nach ISO 13320-1.

Die Zusammensetzungen der Formmassen und die Ergebnisse der Messungen sind der Tabelle zu entnehmen.

| Beispiel | | 0/V | 1/V | 2 | 3 |
|---|---|---|---|---|---|
| Komponenten | [Gew.-%] | | | | |
| A | | 40 | 30 | 30 | 30 |
| B | | 60 | 60 | 60 | 60 |
| C/1 | | | | 10 | |
| C/2 | | | | | 10 |
| D | | | 10 | | |
| Wärmeleitfähigkeit | [W/mK] | 1,1 | 1,3 | 1,6 | 1,5 |
| E-Modul | [GPa] | | 13,5 | 12,3 | 11,7 |
| Zugfestigkeit | [MPa] | | 89 | 66,4 | 73,4 |
| Reißdehnung | [%] | | 1,0 | 0,65 | 0,82 |
| Schlagzähigkeit n. Charpy ungekerbt | [kJ/m²] | | 24,1 | 12,7 | 19,2 |

| | | | | | |
|---|---|---|---|---|---|
| V = Vergleich | | | | | |

## Patentansprüche

1. Thermoplastische Formmassen, enthaltend
A) 19,9 bis 69,99 Gew.-% eines thermoplastischen Polyamids
B) 30 bis 80 Gew.-% eines Aluminiumoxides
C) 0,01 bis 30 Gew.-% Diatomeenerde
D) 0 bis 30 Gew.-% weiterer Zusatzstoffe,
wobei die Summe der Gewichtsprozente A) bis D) 100 % ergibt.

2. Thermoplastische Formmassen nach Anspruch 1, in denen die Komponente C) mit Silanen an der Oberfläche vorbehandelt ist.

3. Thermoplastische Formmassen nach den Ansprüchen 1 oder 2, wobei die Komponente B) ein Aspektverhältnis kleiner 10 aufweist.

4. Thermoplastische Formmassen nach den Ansprüchen 1 bis 3, wobei die Komponente B) eine BET-Oberfläche nach ISO 9277 von kleiner/gleich 12 m²/g aufweist.

5. Thermoplastische Formmassen nach den Ansprüchen 1 bis 4, wobei die Komponente B) einen mittleren Partikeldurchmesser (d₅₀) von 0,2 bis 20 µm aufweist (gemäß Lasergranulometrie nach ISO 13320-1).

6. Thermoplastische Formmassen nach den Ansprüchen 1 bis 5, in denen die Komponente C) fluxcalcinierte Diatomeenerde ist.

7. Thermoplastische Formmassen nach den Ansprüchen 1 bis 6, wobei Komponente C) einen mittleren Partikeldurchmesser (d₅₀) von 0,2 bis 20 µm aufweist (gemessen mit Lasergranulometrie nach ISO 13320-1).

8. Thermoplastische Formmassen nach den Ansprüchen 1 bis 7, wobei Komponente C) eine BET-Oberfläche kleiner/gleich 80 m²/g (gemäß ISO 9277) aufweist.

9. Verwendung der thermoplastischen Formmassen gemäß den Ansprüchen 1 bis 8 zur Herstellung von Fasern, Folien und Formkörpern jeglicher Art.

10. Fasern, Folien und Formkörper jeglicher Art erhältlich aus den thermoplastischen Formmassen gemäß den Ansprüchen 1 bis 8.

## Claims

1. A thermoplastic molding composition, comprising
A) from 19.9 to 69.99% by weight of a thermoplastic polyamide
B) from 30 to 80% by weight of an aluminum oxide
C) from 0.01 to 30% by weight of diatomaceous earth
D) from 0 to 30% by weight of further additives,
where the total of the percentages by weight of A) to D) is 100%.

2. The thermoplastic molding composition according to claim 1, in which component C) has been surface-pretreated with silanes.

3. The thermoplastic molding composition according to claim 1 or 2, where the aspect ratio of component B) is smaller than 10.

4. The thermoplastic molding composition according to claims 1 to 3, where the BET surface area to ISO 9277 of component B) is smaller than or equal to 12 m²/g.

5. The thermoplastic molding composition according to claims 1 to 4, where the average particle diameter (d₅₀) of component B) is from 0.2 to 20 µm (according to laser granulometry to ISO 13320-1).

6. The thermoplastic molding composition according to claims 1 to 5, in which component C) is flux-calcined diatomaceous earth.

7. The thermoplastic molding composition according to claims 1 to 6, where the average particle diameter (d₅₀) of component C) is from 0.2 to 20 µm (measured using laser granulometry to ISO 13320-1).

8. The thermoplastic molding composition according to claims 1 to 7, where the BET surface area (to ISO 9277) of component C) is smaller than or equal to 80 m²/g.

9. The use of the thermoplastic molding compositions according to claims 1 to 8 for the production of fibers, of foils, or of moldings of any type.

10. A fiber, a foil, or a molding of any type obtainable from the thermoplastic molding compositions according to claims 1 to 8.

## Revendications

1. Masses de moulage thermoplastiques, contenant
A) 19,9 à 69,99% en poids d'un polyamide thermoplastique,
B) 30 à 80% en poids d'un oxyde d'aluminium
C) 0,01 à 30% en poids de terres de diatomées
D) 0 à 30% en poids d'autres additifs,
la somme des pour cent en poids de A) à D) valant 100%.

2. Masses de moulage thermoplastiques selon la revendication 1, dans lesquelles le composant C) est prétraité en surface par des silanes.

3. Masses de moulage thermoplastiques selon les revendications 1 ou 2, le composant B) présentant un rapport d'aspect inférieur à 10.

4. Masses de moulage thermoplastiques selon les revendications 1 à 3, le composant B) présentant une surface BET selon la norme ISO 9277 inférieure ou égale à 12 m²/g.

5. Masses de moulage thermoplastiques selon les revendications 1 à 4, le composant B) présentant un diamètre moyen de particules (d₅₀) de 0,2 à 20 µm (selon une granulométrie au laser selon la norme ISO 13320-1).

6. Masses de moulage thermoplastiques selon les revendications 1 à 5, dans lesquelles le composant C) réside dans des terres de diatomées calcinées avec un fondant.

7. Masses de moulage thermoplastiques selon les revendications 1 à 6, le composant C) présentant un diamètre moyen de particules (d₅₀) de 0,2 à 20 µm (mesuré par granulométrie au laser selon la norme ISO 13320-1).

8. Masses de moulage thermoplastiques selon les revendications 1 à 7, le composant C) présentant une surface BET inférieure ou égale à 80 m²/g (selon la norme ISO 9277).

9. Utilisation des masses de moulage thermoplastiques selon les revendications 1 à 8 pour la fabrication de fibres, de feuilles et de corps moulés de tous types.

10. Fibres, feuilles et corps moulés de tous types pouvant être obtenus à partir des masses de moulage thermoplastiques selon les revendications 1 à 8.
